# EUROPEAN PATENT APPLICATION

(11) **EP 3 474 184 A1**
(43) Date of publication of application: **24.04.2019**
(21) Application number: 17197525.3
(22) Date of filing: 20.10.2017
(51) Int. Cl.: G06K 9/00

(54) **DEVICE FOR DETECTING THE INTERACTION OF USERS WITH PRODUCTS ARRANGED ON A STAND OR DISPLAY RACK OF A STORE**

(71) Applicant: Checkout Technologies srl, 37122 Verona (IT)
(72) Inventor: Levkovskiy, Jegor, 14020 Villa San Secondo (AT) (IT); Pandian, Enrico, 37129 Verona (IT)
(74) Representative: Bottino, Giovanni

(57) **Abstract**

Device for detecting the interaction of one or more users (20) with one or more products (22) arranged on at least one stand (21) or display rack of a store, of the supermarket type or the like, comprising video signal acquiring means and video signal processing means (3).

Acquisition means comprise:
- one or more first video cameras (23) oriented towards the products (22),
- one or more second video cameras (24) oriented towards the users,
- one or more third video cameras (25) oriented towards the users (20) and placed in a position above the stand (21) and
- one or more neural networks (33, 34, 35) for processing video signals.

## Description

### Checkout Technologies srl

The present invention relates to a device for detecting the interaction of one or more users with one or more products arranged on at least one stand or display rack of a store, of the supermarket type or the like. The device comprising video signal acquiring means and video signal processing means.

The development of modern digital and information technologies and the consequent reduction of costs, as well as simplicity of use of the technologies, in the last years have driven towards automation of processes also in common everyday activities.

One of the most widespread activities, such as doing shopping, has been subjected to a deep renovation and automation, in order to help users.

On-line shopping is more and more used, where a user can purchase products, also of everyday use, directly over Internet.

Therefore stores are obliged to adapt themselves by offering more and more technological, innovative and efficient services allowing users to do shopping in a simple and quick manner.

Thus processes taking place inside stores are desired to be automatized while limiting as much as possible the action of a possible shop assistant or person in charge of the store.

However the fact of maximizing the contribution of automatic systems for managing stores inevitably generates different drawbacks.

Leaving out of consideration security problems, related to shoplifting, concealment of goods and products, as well as product packaging tampering, the systems known in prior art have problems related to the management of stock, since it is particularly complicated to immediately accurately define the products purchased by the users, such to update in real-time both a possible shopping list of the users and the stock.

The difficulty in updating the shopping list in real-time does not allow the processes following the shopping to be automatized, such as for example the payment of purchased products.

The automation of payment is the target of systems known in prior art, since this is the most time spending action, due to the fact that it requires the recognition of purchased products and the association of them to the user.

Systems known in prior art suggest solutions that require the use of specific devices for product recognition or complicated and not much user friendly systems or systems requiring a high computational power.

Therefore there is the need not satisfied by prior art systems to provide an efficient system easy to be used, allowing procedures in a store to be speeded up, by automating critical processes, such as for example filing in a list of the products picked up by a user.

The present invention achieves the above objects by providing a device for detecting the interaction of one or more users with one or more products arranged on at least one stand or display rack of a store, such as described hereinbefore, wherein acquisition means comprise one or more first video cameras oriented towards the products, one or more second video cameras oriented towards the users, one or more third video cameras oriented towards the users and placed in a position above the stand and one or more neural networks for processing video signals.

The combination of the different points of view on users and products respectively with the processing of video signals by the neural networks allows the interaction of users with products on the stand to be detected, particularly it makes it possible to understand whether and which user has picked up, moved or released a specific product on the stand. The configuration described above allows information to be obtained which are limited as regards the computational burden but are enough to guarantee high performances as regards the recognition of users, products and their interactions.

The device of the present invention for example can be part of a wider system automatically filing in a list of products picked up by a user in the store.

In one embodiment, the video signal processing means comprise at least one first neural network connected to first video cameras for recognizing products on the stand and gestures of users.

Thus the device can detect in real-time which products are present on the stand and can recognize a gesture of a user, for example grasping and consequently removing a specific product from the stand, due also to the fact of previously having detected the presence of such product on the stand.

In a further embodiment, video signal processing means comprise at least one second neural network connected to second video cameras for recognition of the face of the users in proximity of the stand.

This allows one or more users standing near the stand who can interact with products to be recognized, preferably by acquiring the face of a user and by extracting the face map of the user.

In a further embodiment video signal processing means comprise at least one third neural network connected to third video cameras for recognition of the position and gestures of the users in proximity of the stand.

This allow the space position of users to be detected and their gestures to be recognized, such as for example the fact of stretching out an arm to pick up a product on the stand.

In one preferred embodiment, third video cameras are stereoscopic video cameras.

The use of such type of video cameras makes it possible to analyse the depth at which the arms of the several users are, such to accurately identify their gestures, particularly at which height a hand is and therefore with which shelf it may interact.

In one embodiment the processing means comprise a unit managing the neural networks, which managing unit identifies at least one product picked up or released on the stand and the user who has picked up or released the product by means of a combination of video signal processing.

Thus the processing carried out in parallel by the three neural networks are analysed in real-time in a manner combined with one another, to accurately identify whether and which products have been moved, picked up or released and by which user. This combination of several pieces of information is surprisingly efficacious in all the cases, also in more complicated cases such as for example cases with a plurality of user near the stand or even contemporaneously interacting with the same stand.

The configuration described above allows a particularly slim architecture of the device to be obtained requiring limited computational power.

According to one embodiment, the managing unit is configured such that it is activated when the third neural network connected to the third video cameras detects the presence of a user near the stand.

This allows the managing unit or even the whole device to be maintained in a deactivated or "idle" condition, while maintaining only the control on users approaching the stand as activated. Once a user gets nearer, the managing unit is activated and it combines and analyses information to detect the interaction of the user with the products of the stand. More generally, the third neural network is configured such that it activates the managing unit on the basis of gestures of one or more users. Therefore the device comprises specific activation means that remain in alert condition and that activate the managing unit only when they detect a specific gesture of a user.

In one embodiment the processing means comprise means training said neural networks, which training means use predetermined datasets of products and/or gestures.

Neural networks of each stand can thus immediately identify a gesture or a product and recognize it among a plurality of preloaded and known products and gestures.

Said means train the neural networks by using specific datasets realized to allow neural networks to recognize products and gestures of the users.

Datasets are fed to the neural network that adapts itself for the recognition of what is inside the dataset.

For example for the recognition of a product, images of the products are acquired and during the training of the neural networks some characteristics of acquired images are slowly modified (pixel color, position and points of view of the product, etc) to optimize the recognition on that dataset.

Thus the neural network learns to recognize not only such dataset, but it is able also to recognize situations with changes different from the origin dataset, such as for example a point of view different from those in the dataset, but with enough information to go back to a known product or gesture.

The neural network is able also to accomplish a self-learning. If the network is not able to make recognition of an item, it can be indicated by an operator. The neural network uses information received from the operator to learn to recognize better the product and therefore to improve its own performances.

In one embodiment the device is configured to detect the interaction of one or more users with one or more products arranged on at least two stands placed in front of each other. The second video cameras installed on a stand are intended to generate a planogram of the stand in front of them. The second neural network is intended to detect a product being moved, picked up, or released in the stand in front of them.

The term planogram means one or more images of the products present on a stand according to a front view.

The second video cameras therefore acquire the planogram of the stand in front of them, in addition to the user faces. By the second neural network therefore it is possible to evaluate whether, after the passage of a user, a change of the planogram has occurred which means an interaction of the user with a product on the stand in front of it. Therefore the managing unit interfaces with the second neural network of the stand in front of it to obtain information about the planogram of its own stand. Such further information is combined with information described above, to check the congruity and to obtain improved performances in recognizing the interaction of the user with products: the planogram can confirm whether a product has been picked up or released, if there is a change between images acquired before and after the passage of the user.

According to a preferred variant embodiment the processing means comprise one or more storage units and processor means for executing a logic program, whose execution provides the following steps:
a) Acquiring products present in a specific stand before the passage of one or more users;
b) Recognizing the users present at the specific stand;
c) recognizing the gestures of the users at the stand;
d) Acquiring products present in the stand after the passage of one or more users;
e) Identifying at least one product picked up from or released in the stand.

Moreover the logic program can provide a step filing in a purchase list associated to each user, such list showing the products picked up by each user from the stand.

As it will be more clear from the disclosure of some embodiments, acquisitions of video cameras and consequent processing of neural networks generate probabilities that an event has occurred, whose combination guarantees the reasonable certainty that a specific product has been picked up by a specific user.

Advantageously it is possible to provide the several acquisitions to give different contributions, that is to have a different weight in the calculus of probability.

For such reason processing means have means weighing the contribution of each acquired video signal.

For example it is possible to provide the planogram to contribute to a less extent in calculating the result with respect to gesture recognition.

Information deriving from the planogram is not always reliable due above all to the arrangement of products in the stand: if there are two identical products one behind the other, not necessarily the planogram makes it possible to evaluate one of them being actually picked up.

These and other characteristics of the present invention will be more clear from the following description of some embodiments shown in annexed drawings wherein:
figure 1 is one embodiment of the device;
figures 2a and 2b are a front and a side view of first video cameras respectively;
figures 3a and 3b are a front and side view of the second video cameras respectively;
figures 4a and 4b are a front and side view of the third video cameras respectively;
figure 5 is the second video cameras in carrying out the planogram;
figure 6 is a block diagram of the device.

It is specified that figures annexed to the present patent application show some embodiments of the system of the present invention, in order to better understand advantages and characteristics disclosed.

Therefore such embodiments have to be intended merely for illustration purposes and not as a limitation to the inventive concept of the present invention, namely to provide a device allowing the interaction of a user with a stand or display rack to be recognized efficaciously and in automated manner.

The device can be easily implemented in any display area for visually accessible products.

For example it is possible to use the system of the present invention also in common product displaying "islands", where products are not orderly arranged, such as baskets, pallets, refrigerated cabinets or other item displaying solutions simply by modifying the position of video cameras.

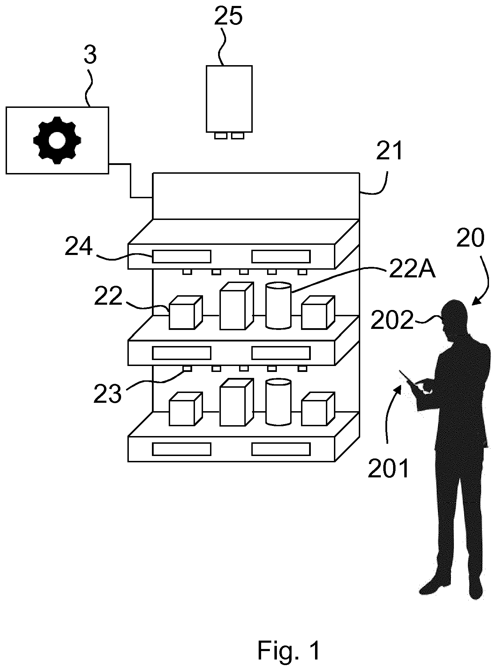

Figure 1 shows a general embodiment of the device of the present invention, installed on a stand 21 having a plurality of shelves on which some products 22 are arranged, which shelves can be accessed by one or more users 20, who can interact with products by picking them up, moving them or releasing other products.

The device comprises video signal acquisition means and video signal processing means 3.

Acquisition means comprise a plurality of first video cameras 23 oriented towards the products, a plurality of second video cameras 24 oriented towards users 20, one or more third video cameras 25 oriented towards the users 20 and placed in a position above the stand 21.

Video signal processing means 3 comprise at least three neural networks 33, 34, and 35 for processing video signals of the video cameras described above, and a managing unit 36 for the neural networks.

Video signal processing means 3 comprise a first neural network 33 connected to first video cameras 23 for recognizing the products 22 on the stand 21 and gestures of users 20.

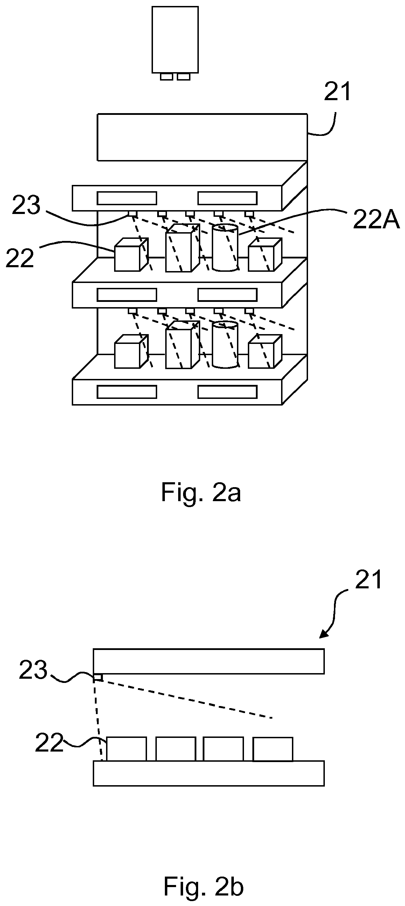

Such as shown in figures 2a and 2b first video cameras 23 are arranged such to record products 22 from above, particularly for each shelf they are placed at the lower part of the access edge of the upper shelf. For the highest shelf specific supports can be used, not shown in figures.

The first video cameras 23 can be of any type known in prior art. Such as shown in figure 2b the first video cameras 23 have such an orientation and angle of vision that they capture all the products 22 present between the access edge of the shelf and the bottom of the shelf.

According to a particularly advantageous embodiment, first video cameras 23 placed adjacent one another have fields of view superimposed at least partially with one another. Video signal processing means 3 are configured to carry out a combination of the video streams of a plurality of first video cameras 23 adjacent one another for generating a combined video stream, according to a technique known in prior art as "stitching", wherein the several frames belonging to the different video streams are combined in a panoramic frame. Video signal processing means 3 are configured to analyse such combined video stream for recognizing the products 5 on the stand and/or for recognizing the gestures of a user.

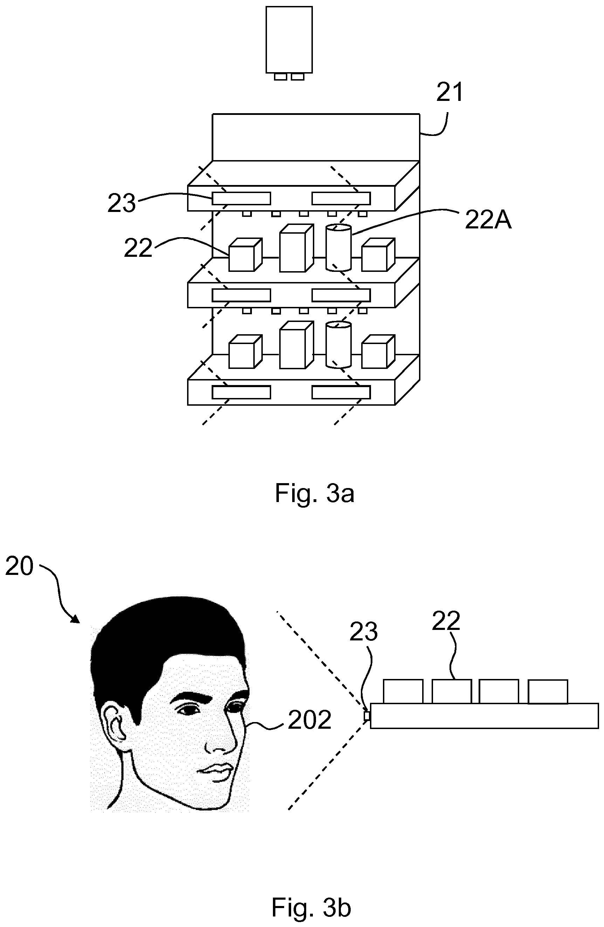

Video signal processing means 3 comprise a second neural network 34 connected to the second video cameras 24, shown in figures 3a and 3b, for recognizing the face 202 of users 20 near the stand 21.

Second video cameras 24 are preferably of the "wide angle" type, such to capture a wide portion of the space in front of the stand 21 where they are installed.

Second video cameras 24 are oriented towards the user 20 and can be placed at the access edge of the shelf, such as shown in figure 3b; as an alternative or in combination, the second video cameras 24 can be placed at the bottom of the shelf, preferably on the back panel of the stand 21.

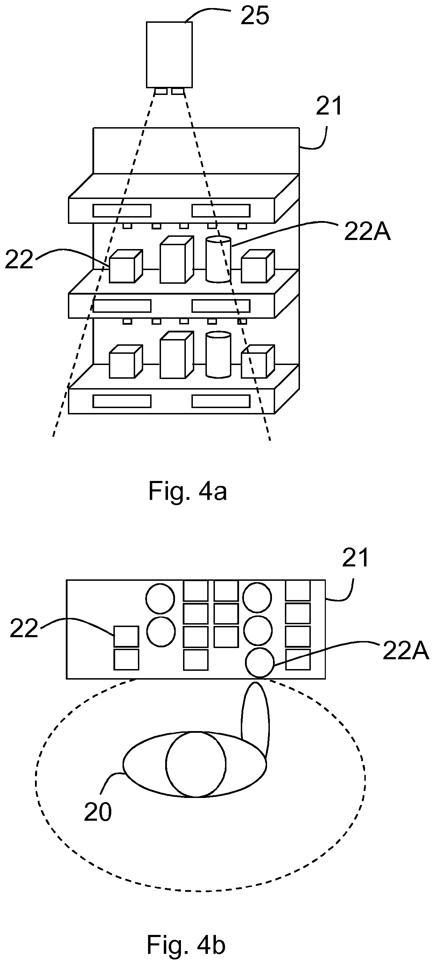

Video signal processing means 3 comprise a third neural network 35 connected to third video cameras 25, shown in figures 4a and 4b, for recognizing the position and gestures of users 20 near the stand 21.

Third video cameras 25 preferably are stereoscopic video cameras, such to have a depth of vision and to identify gestures of the user 20.

The third video camera 25 moreover allows the gestures and the precise position to be identified with respect to the stand 21 in front of which the user 20 stands. The third video camera 25 carries out a detection related to three Cartesian axes x, y and z while the first and second video cameras 23 and 24 detects only x and y planes. By the triangulation of information it is possible to go back to the user 20 to whom the hand acting on the shelf of the stand 21 belongs, distinguishing him/her from people standing near it.

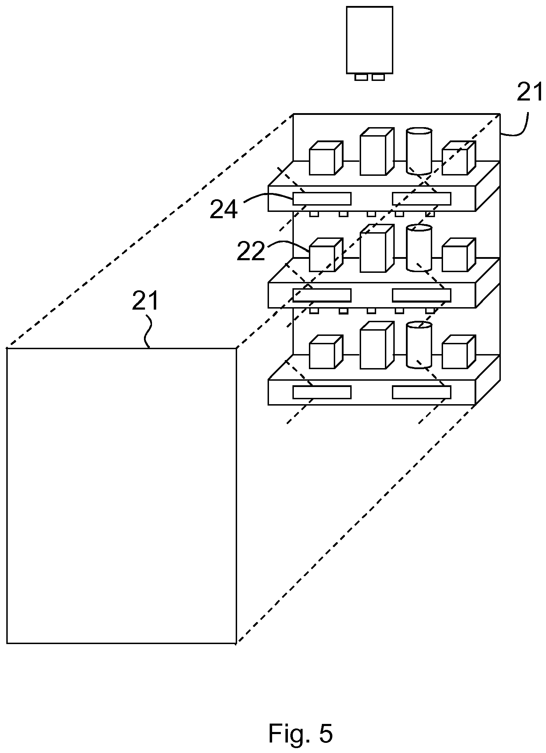

Such as shown in figure 5, the second video cameras 24 installed on a stand 21 are intended to generate a planogram of a stand 21' in front of them, that is are configured such that they capture from the front and entirely the stand 21', that is in front of the stand 21 on which they are installed, and the products the stand 21' is supporting.

The planogram is analysed by the second neural network 34, which therefore is intended to detect a product being moved, picked up or released in the stand 21' in front of it.

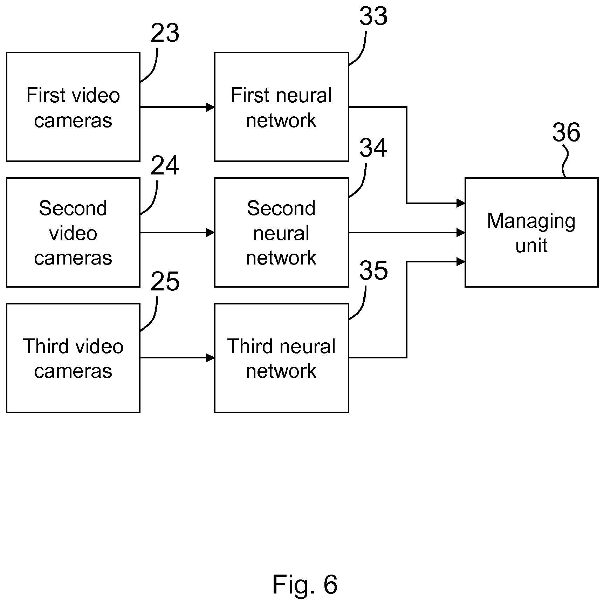

Figure 6 shows a block diagram of the device.

The managing unit 36 mentioned above identifies at least one product 22 picked up or released on the stand 21 and the user 20 who has picked up or released such product 22 by a combination of video signal processing.

The first, second and third video cameras 23, 24 and 25 generate three distinct video streams that are taken as input and analysed by the first, second and third neural networks 33, 34 and 35 respectively.

Outputs of the three neural networks 33, 34 and 35 are acquired by the managing unit 36, which on the basis of such outputs evaluates the probability a given interaction between the user 20 and one or more products 22 has occurred.

The managing unit 36 is configured such that it is activated when the third neural network 35 connected to the third video cameras 25 detects the presence of a user 20 near the stand 21. The third video cameras 25 acquire a continuous video stream that is analysed by the third neural network. If a user 20 stands near the stand 21 and stretches out a hand towards a shelf, this can be identified as a gesture picking up a product. This activates the first neural networks of the shelf, that begin to analyse the video stream generated by the first video cameras 23 for identifying the gesture and/or the product picked up only for the shelf involved by the action.

Processing means 3 comprise means training said neural networks, which training means use predetermined datasets of products and/or gestures.

Processing means 3 comprise a local or remote storage unit. A database containing said predetermined datasets of products and/or gestures is stored in such unit.

Advantageously it is possible to provide also further information about products 22 present in the stands 21 inside the database 101.

Such information for example can be about EAN codes, price or other data important for the user, or for the operator of the store, both the cashier and the person in charge of placing products on the stands.

An example of the operation of the device is described below.

When the user 20 stands near the stand 21, the second video cameras 4 acquire the face 202 of the user 20 and his/her face print.

Meanwhile the third video cameras 25 identify the position of the user 20, verify how many users 20 are present and whether they are in a position close enough to the stand 21 to pick up a specific product 22. The third video cameras 25 identify also the position of limbs and therefore also of gestures of users.

The video stream is converted in a data stream providing to generate a Cartesian plane on which both users 20, coordinates of their limbs being provided, and products 22, whose coordinates are provided by the planogram, are placed.

The user 20 stands between two stands 21 and 21', makes a gesture that activates the processing system related to the stand, such that his/her gesture is also recorded from above.

Third video cameras 25 are able to confirm the height at which the arm of the user 20 moves, while the planogram can indicate which product was present at the coordinates where the arm of the user 20 actually is present.

Third video camera 25 can activate or deactivate the local system of the stand 21 upon the passage of a person. Once the system of stand 21 is activated, the measurement of where the user is, where his/her hands are take place and the faceprint is associated to the user.

First video cameras 23 that capture the shelves await for something to happen: meanwhile they detect which products they are visualizing. When a gesture is made, the system of neural networks of the stand or shelf is enabled and the recognition of the gesture and of the picked up or released product 22 starts. Putting together information from first video cameras 23, from second video cameras 24 and third video cameras 25 will allow who has picked up or released a specific product to be indicated.

Advantageously it is possible to provide when there is a change in the video stream of the first video cameras 23 capturing the detailed view of the shelves, to operate neural networks to analyse what is going on. Neural networks recognize the moved product and the gesture made.

The third video camera 25 captures from above the user 20 that has made the gesture and his/her relative position and triangulates such information with the video stream of second video cameras 24 that detect the faces.

The acquisition of the planogram, then can confirm that a product has been picked up or released, if there is change between two frames taken before and after the passage of the user 20: once the user 20 moves away, the new planogram can confirm the product has been picked up.

The signal acquired by the first video cameras 23 that capture in direction of the shelf on which they are installed, recognizes the picked up product 22.

Once the planograms are recorded before and after the passage of the user 20, once the user 20 is recognized by the face map recorded by the second video cameras 24 and once gestures and products 22 are identified, the managing unit 36 is able to process all data and to evaluate the probability that something has happened, particularly:
it is probable that the product 22A has been picked up,
it is probable that the user 20 has picked up the product 22A,
it is probable that the user 20 is close to another user (not shown),
it is probable that the user 20 has picked up the product 22A, due to gestures,
it is probable that the product 22A has been picked up from the second shelf of the stand, due to the depth of the hand that moved.

By all such analyses of video streams, a series of results is obtained that once summed together gives a final result, 1 or 0 deriving from percentages of probability.

Finally the device recognizes the products 22 and associate them to the user 20 picking them up on the basis of the gestures made by him/her.

According to a possible embodiment the processing means 3 can comprise means identifying the face expression of a user 20 upon picking up a product 22 from the stand 21.

Moreover it is possible to provide a software application to be installed on a user portable device 201, such as smartphone or the like, by means of which the user 20 can check the list of picked up products.

The same process occurs also if the user 20, instead of picking up a product 22, puts it back on the stand 21.

It is possible to provide further sensors to help the processing by the processing means 3: for example it is possible to provide RFID tags, pressure sensors or infrared sensors placed on stands 21 for recognizing the products 22.

## Claims

1. Device for detecting the interaction of one or more users (20) with one or more products (22) arranged on at least one stand (21) or display rack of a store, of the supermarket type or the like, comprising video signal acquiring means and video signal processing means (3),
**characterized in that**
acquisition means comprise one or more first video cameras (23) oriented towards the products (22), one or more second video cameras (24) oriented towards the users, one or more third video cameras (25) oriented towards the users (20) and placed in a position above the stand (21) and one or more neural networks (33, 34, 35) for processing video signals.

2. Device according to claim 1, wherein video signal processing means (3) comprise at least one first neural network (33) connected to first video cameras (23) for recognizing products (22) on the stand (21) and gestures of users (20).

3. Device according to one or more of the preceding claims, wherein video signal processing means (3) comprise at least one second neural network (34) connected to second video cameras (24) for recognition of the face (202) of the users (20) in proximity of the stand (21).

4. Device according to one or more of the preceding claims, wherein video signal processing means (3) comprise at least one third neural network (35) connected to third video cameras (25) for recognition of the position and gestures of the users (20) in proximity of the stand (21).

5. Device according to one or more of the preceding claims, wherein third video cameras (25) are stereoscopic video cameras.

6. Device according to one or more of the preceding claims, wherein the processing means comprise a unit (36) managing the neural networks (33, 34, 35), which managing unit (36) identifies at least one product (22) picked up or released on the stand (21) and the user (20) who has picked up or released the product (22) by means of a combination of video signal processing.

7. Device according to claim 6, wherein the managing unit is configured such that it is activated when the third neural network (35) connected to the third video cameras (25) detects the presence of a user (20) near the stand (21).

8. Device according to one or more of the preceding claims, wherein the processing means (3) comprise means training said neural networks (33, 34, 35), which training means use predetermined datasets of products and/or gestures.

9. Device according to one or more of the preceding claims, wherein the device is configured to detect the interaction of one or more users (20) with one or more products (22) arranged on at least two stands (21, 21') placed in front of each other, the second video cameras (24) installed on a stand being intended to generate a planogram of the stand in front of them, and the second neural network (34) being intended to detect a product being moved, picked up or released in the stand in front of them.
